# EUROPÄISCHE PATENTSCHRIFT

(11) **EP 2 809 896 B1**
(45) Veröffentlichungstag und Bekanntmachung des Hinweises auf die Patenterteilung: **22.06.2016**
(21) Anmeldenummer: 13700068.3
(22) Anmeldetag: 04.01.2013
(51) Int. Cl.: F01N 3/20

(54) **DOSIERMODUL UND ABGASNACHBEHANDLUNGSEINRICHTUNG**
METERING MODULE AND EXHAUST GAS AFTER-TREATMENT DEVICE
MODULE DE DOSAGE ET DISPOSITIF DE POST-TRAITEMENT DES GAZ D'ÉCHAPPEMENT

(30) Priorität: 01.02.2012 DE 102012201405
(43) Veröffentlichungstag der Anmeldung: 10.12.2014
(73) Patentinhaber: Robert Bosch GmbH, 70442 Stuttgart (DE)
(72) Erfinder: DOEHRING, Jochen, 70439 Stuttgart-Stammheim (DE)
(86) Internationale Anmeldenummer: PCT/EP2013/050079
(87) Internationale Veröffentlichungsnummer: WO 2013/113525

(56) Entgegenhaltungen:
- WO-A1-2013/056963
- DE-A1-102004 054 238

## Beschreibung

Die Erfindung betrifft ein Dosiermodul, insbesondere für eine Abgasnachbehandlungseinrichtung eines Kraftfahrzeugs, mit einem Dosierventil zum Einspritzen eines flüssigen Mediums, wobei dem Dosierventil ein Zulaufkanal für das einzuspritzende Medium zugeordnet ist, und wobei in den Zulaufkanal mindestens eine Frischluftkanal mündet, in welchem ein Rückschlagventil angeordnet ist.

Ferner betrifft die Erfindung eine Abgasnachbehandlungseinrichtung für ein Kraftfahrzeug, mit einem Abgasstrang, durch welchen Abgas einer Brennkraftmaschine des Kraftfahrzeugs geleitet wird, und mit einem dem Abgasstrang zugeordneten Dosiermodul zum Einspritzen von flüssigem Abgasnachbehandlungsmittel in das Abgas.

### Stand der Technik

Dosiermodule sowie Abgasnachbehandlungseinrichtungen der eingangs genannten Art sind aus dem Stand der Technik bereits bekannt (z.B. aus DE 10 2004 054 238 A). Um die Schadstoffemissionen von Brennkraftmaschinen im Kraftfahrzeugbau zu vermindern, ist es bekannt, dem Abgas ein Abgasnachbehandlungsmittel beispielsweise in Form einer wässrigen Harnstofflösung beizumischen, die dann in einem Katalysator mit dem Abgas zusammenwirkt beziehungsweise reagiert, um die Schadstoffe zu verringern. Üblicherweise wird dabei durch einen Zulaufkanal einem Dosierventil des Dosiermoduls das einzuspritzende Medium zugeführt.

Das Dokument WO 2013/056963 A offenbart ebenfalls ein Dosiermodul, was aber gemäß Artikel 54(3) EPÜ nur in Bezug auf Neuheit zum Stand der Technik zählt.

### Offenbarung der Erfindung

Um bei einem Abschalten des Systems zu gewährleisten, dass keine Flüssigkeit in dem Ventil verbleibt, die bei niedrigen Temperaturen gefrieren und zu einer Beschädigung des Ventils führen könnte, weist das erfindungsgemäße Dosiermodul einen Frischluftkanal auf, der in den Zulaufkanal mündet und ein Rückschlagventil aufweist. Wird das Dosiermodul durch eine Impulsentleerung deaktiviert, bei welcher die sich bis dahin in dem Dosiermodul befindliche Flüssigkeit durch einen Druckimpuls aus dem Dosierventil in Richtung des Zulaufkanals beziehungsweise entgegen der Einspritzförderrichtung getrieben wird, kann durch den Frischluftkanal Umgebungsluft in das Dosiermodul, insbesondere in das Dosierventil nachströmen, wodurch ein vollständiges Entfernen der Flüssigkeit ermöglicht wird. Das Rückschlagventil verhindert, dass im Normalbetrieb das Medium durch den Frischluftkanal aus dem Dosiermodul entweichen kann.

Das erfindungsgemäße Dosiermodul mit den Merkmalen des Anspruchs 1 hat ferner den Vorteil, dass ein geringeres Strömungsvolumen bei einer Impulslehrung des Dosierventils bereits zum Öffnen des Rückschlagventils führt. Erfindungsgemäß ist hierzu vorgesehen, dass dem Rückschlagventil eine Drossel zugeordnet ist. Durch die Drossel wird ein Strömungsquerschnitt in dem Frischluftkanal verkleinert, wodurch lokal ein größerer Unterdruck erzeugt und dadurch bei gleich bleibendem Volumenstrom des zurück geförderten Mediums ein höherer Druck auf das Rückschlagventil wirkt, so dass dieses früher öffnet und länger geöffnet bleibt. Hiermit wird gewährleistet, dass eine größere Menge an Frischluft in das System gelangt, wodurch der Entleerungsvorgang vorteilhaft unterstützt wird.

Vorzugsweise ist die Drossel dem Rückschlagventil in Druckströmungsrichtung des Rückschlagventils in dem Frischluftkanal nachgeschaltet. Die Drossel ist somit zwischen dem Zulaufkanal und dem Rückschlagventil angeordnet, so dass der Unterdruck vorteilhaft auf das Rückschlagventil wirkt, um das Ventilelement des Rückschlagventils, das beispielsweise als Kugel ausgebildet ist, in seine Öffnungsstellung zu ziehen.

Besonders bevorzugt weist das Rückschlagventil als Ventilkörper einen Ventilkolben auf. Der Ventilkolben unterscheidet sich zu der Kugel dahingehend, dass er zumindest im Wesentlichen zylinderförmig ausgebildet ist oder zumindest einen zylinderförmigen Abschnitt aufweist, mit welchem der Kolben beziehungsweise der Ventilkörper axial geführt wird. Besonders bevorzugt weist der Ventilkolben einen Endabschnitt mit einem vergrößerten Durchmesser auf, der als sogenannter Ventilteller mit einem Ventilsitz zum Verschließen des Frischluftkanals zusammen wirkt. Durch die kolbenförmige Ausbildung des Ventilkörpers entstehen Reib-Kontaktflächen, die vorzugsweise zu einer derartigen Selbsthemmung führen, die ein langsames Öffnen beziehungsweise Freigeben des Frischluftkanals gewährleistet.

Besonders bevorzugt ist der Ventilkolben in einer Ventilhülse axial verlagerbar angeordnet. Die Ventilhülse als Bestandteil des Rückschlagventils nimmt somit den Ventilkolben auf und bildet vorzugsweise gleichzeitig den Ventilsitz. Die Ventilhülse und der Ventilkolben können optimal aufeinander abgestimmt werden, um die gewünschte Mechanik und Reibwirkung zu gewährleisten.

Gemäß einer vorteilhaften Weiterbildung der Erfindung ist vorgesehen, dass das Rückschlagventil rückstellfederfrei ausgebildet ist. Im Unterschied zu üblichen Rückschlagventilen ist hierbei also vorgesehen, dass keine Rückstellfeder vorgesehen ist, die das Ventilelement beziehungsweise den Ventilkolben in den Ventilsitz zurückdrängt. Die Selbsthemmung des Ventilkolbens führt dazu, dass der Kolben, wenn er sich in der geöffneten oder geschlossenen Stellung befindet, nicht ohne weiteres in die andere Stellung fallen kann. Bevorzugt ist ein Anschlag vorgesehen, bis zu dem der Kolben in eine maximalen Öffnungsstellung verlagerbar ist. Der Anschlag wird vorzugsweise von der Hülse und/oder von der Drossel gebildet. Der Anschlag ist insbesondere derart ausgebildet, dass ein Verschließen der Drossel durch den in Öffnungsrichtung verlagerten Ventilkolben verhindert wird. So kann der Anschlag beispielsweise als die Durchströmungsöffnung der Drossel umgebende Axialvorsprünge ausgebildet sein, zwischen denen Frischluft radial in Richtung der Durchströmungsöffnung strömen kann.

Weiterhin ist bevorzugt vorgesehen, dass das Dosiermodul ein das Dosierventil aufnehmendes Gehäuse aufweist. Das Gehäuse hält das Dosierventil an Ort und Stelle und dient zur Anbindung des Dosierventils an die übrige Abgasnachbehandlungseinrichtung, insbesondere an die Quelle beziehungsweise Versorgungsleitung des einzuspritzenden Mediums sowie an eine das Ventil ansteuernde Steuereinrichtung.

Besonders bevorzugt bildet das Gehäuse den Zulaufkanal oder weist diesen auf. Der Zulaufkanal kann beispielsweise einstückig mit dem Gehäuse ausgebildet sein. Entsprechend ist bevorzugt auch der Frischluftkanal in dem Gehäuse angeordnet. Somit ist auch das Rückschlagventil in dem Gehäuse angeordnet und kann als Baugruppe vormontiert werden. Natürlich wäre aber auch eine Ausbildung derart denkbar, dass der Frischluftkanal und/oder der Zulaufkanal von dem Dosierventil selbst gebildet werden.

Die erfindungsgemäße Abgasnachbehandlungseinrichtung mit den Merkmalen des Anspruchs 8 führt zu den oben bereits genannten Vorteilen, wonach eine vollständige Entleerung des Dosiermoduls beziehungsweise des Dosierventils im Bedarfsfall durch einen ausreichend großen Frischluftstrom gewährleistet wird. Die Abgasnachbehandlungseinrichtung zeichnet sich dabei durch die Ausbildung des Dosiermoduls wie es obenstehend beschrieben wurde aus.

Im Folgenden soll die Erfindung anhand der Zeichnung näher erläutert werden. Dazu zeigen
- Figur 1: ein Dosiermodul in einer Schnittdarstellung
- Figur 2: eine Detailansicht des Dosiermoduls in einer weiteren Schnittdarstellung.

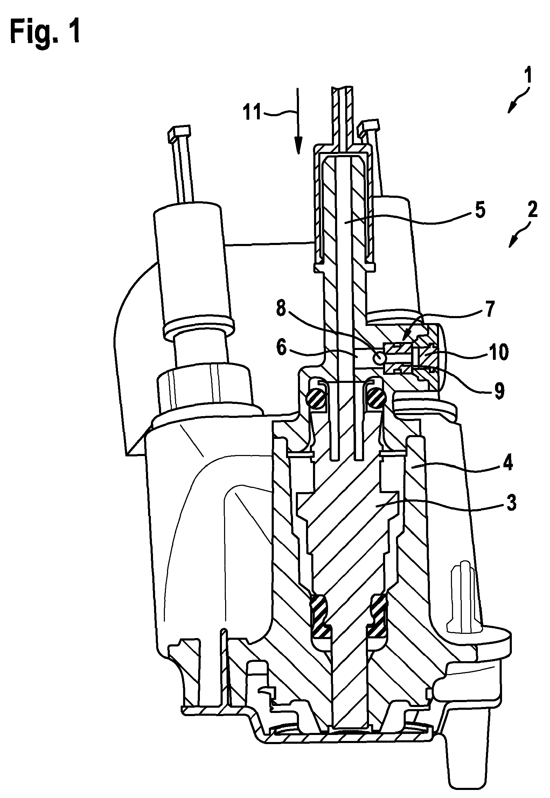

Figur 1 zeigt ein Dosiermodul 1 einer Abgasnachbehandlungseinrichtung 2 eines hier nicht näher dargestellten Kraftfahrzeuges. Das Dosiermodul 1 ist einem Abgasrohr eines Abgasstrangs zugeordnet, um mittels eines stark vereinfacht dargestellten Dosierventils 3 flüssiges Abgasnachbehandlungsmittel in das durch das Abgasrohr strömende Abgas einer Brennkraftmaschine des Kraftfahrzeuges einzuspritzen, sodass dieses zusammen mit dem Abgas in einem stromabwärts gelegenen Katalysator zur Reduktion von Schadstoffemissionen reagiert.

Das Dosiermodul 1 weist ferner ein das Dosierventil 3 im Wesentlichen aufnehmendes Gehäuse 4 auf, das einen Zulaufkanal 5 bildet, welcher zu einem Einlass des Dosierventils 3 führt, um dem Dosierventil 3 das einzuspritzende Medium zuzuführen. In den Zulaufkanal 5 mündet seitlich ein Frischluftkanal 6, durch welchen Frischluft aus der Umgebung in den Zulaufkanal 5 strömen kann. In dem Frischluftkanal 6 ist ein Rückschlagventil 7 angeordnet, das den Frischluftkanal 6 automatisch verschließt, wenn ein Druckabfall über das Rückschlagventil einen Grenzwert überschreitet, und öffnet, wenn der Druckabfall den Grenzwert unterschreitet. Hierzu weist das Rückschlagventil 7 als Ventilelement eine Kugel 8 auf, die mittels einer hier aus Übersichtlichkeitsgründen nicht dargestellten Rückstellfeder in einen Ventilsitz an einem Rückschlagventilkörper 9 gepresst wird. Dadurch verschließt die Kugel 8 eine in dem Rückschlagventilkörper 9 ausgebildete Durchströmungsöffnung. Das Rückschlagventil 7 ist derart ausgebildet, dass die Rückstellfeder den Druck in dem Zulaufkanal 5 unterstützend die Kugel 8 entgegen der Einströmrichtung der Frischluft in den Ventilsitz drängt. An seinem dem Zulaufkanal 5 gegenüberliegenden Ende weist der Frischluftkanal 6 einen Luftfilter 10 auf, der das Eindringen von Partikeln in das Dosiermodul 1 verhindert, wenn Umgebungsluft durch den Frischluftkanal 6 einströmt.

Im Betrieb wird dem Dosierventil 3 das einzuspritzende Medium durch den Zulaufkanal 5 in Richtung des Pfeils 11 zugeführt, sodass das Dosierventil 3 stets mit dem flüssigen Medium gefüllt ist. Da bei niedrigen Temperaturen unterhalb des Gefrierpunktes des Mediums das Gefrieren des Mediums zu Beschädigungen an dem Dosierventil 3 führen könnte, wird die Flüssigkeit beziehungsweise das Medium aus dem Dosierventil 3 entfernt, wenn es deaktiviert wird. Hierzu ist eine sogenannte Impulsentleerung vorgesehen, bei welcher durch plötzliches Schließen des Dosierventils 3 ein Druckimpuls dafür sorgt, dass das im Dosierventil 3 befindliche Medium aus dem Dosierventil 3 in Richtung des Zulaufkanals 5 heraus- beziehungsweise zurückgespült wird. Unterschreitet dabei der Druckabfall den genannten Grenzwert, öffnet das Rückschlagventil 7 und es strömt Frischluft durch den Frischluftkanal 6 in den Zulaufkanal 5 ein beziehungsweise nach. Die Frischluft kann im Normalbetrieb auch dazu dienen, ein Luftpolster zu bieten, welches den im System erhöhten Druck aufgrund von Eisbildung aufnehmen kann.

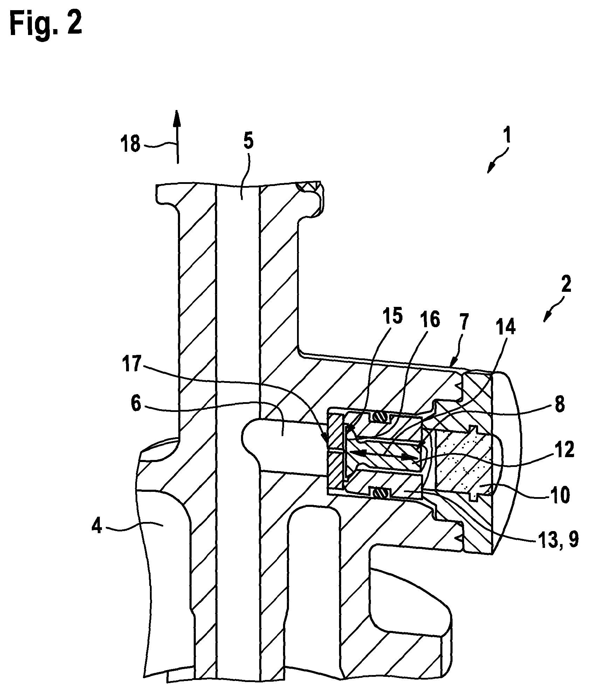

Figur 2 zeigt eine erfindungsgemäße Ausbildung des Dosiermoduls 1, wo bereits bekannte Elemente aus Figur 1 mit den gleichen Bezugszeichen versehen sind und in sofern auf die obenstehende Beschreibung verwiesen wird. Im Folgenden soll im Wesentlichen nur auf die Unterschiede eingegangen werden.

Das erfindungsgemäße Dosiermodul 1 weist anstelle der Kugel als Ventilkörper 8 einen Ventilkolben 12 auf, der in einer Ventilhülse 13 axial verlagerbar angeordnet ist, wie durch einen Doppelpfeil 14 angedeutet. Die Ventilhülse 13 wird dabei von dem Rückschlagventilkörper 9 gebildet, welcher an seinem dem Zulaufkanal 5 zugewandten Ende einen Ventilsitz 15 aufweist, gegen welchen der Ventilkolben 12 mit einem an seinem Ende ausgebildeten Ventilteller 16 zum Verschließen des Frischluftkanals 6 anliegt. Der Ventilkolben 12 ist in der Ventilhülse 13 derart axial geführt, das eine Reibwirkung zwischen Kolben und Ventilhülse besteht, die zu einer Selbsthemmung des Ventilkolbens 12 derart führt, dass dieser nicht einfach von der geschlossenen in eine offene Position fällt. Vielmehr muss vorher die Reibung überwunden werden. Das Rückschlagventil 7 ist insgesamt rückstellfederfrei ausgebildet, so dass der Ventilkolben 12 nicht von einer Rückstellfeder beaufschlagt ist, die diesen in die geschlossene Stellung drängen würde.

Zwischen dem Rückschlagventil 7 und dem Zulaufkanal 5 ist weiterhin eine Drossel 17 vorgesehen, die einen im Vergleich zum Frischluftkanal 6 verkleinerten Durchströmungsquerschnitt aufweist, durch welchen die einströmende beziehungsweise nachströmende Frischluft gezwungen wird. Die Drossel 17 ist in den vorliegenden Ausführungsbeispielen als Drosselplatte beziehungsweise -scheibe ausgebildet, die zwischen einem Gehäuseanschlag und der Ventilhülse 13 gehalten ist. Hierzu weist die Ventilhülse 13 an ihrem Außenumfang einen vorstehenden Steg auf, der sich derart weit axial erstreckt, dass der Kolben sich aus der geschlossenen in eine geöffnete Stellung verlagern kann, in welcher ausreichend Frischluft durch den dadurch freigegebenen Durchströmungsquerschnitt einströmen beziehungsweise nachströmen kann. Vorzugsweise weisen der Ventilkolben 12 oder die Drossel 17 Abstandhalter auf, die verhindern, dass der Kolben 12 in geöffneter Stellung auf der Drossel 17 derart aufliegt, dass ihr Durchströmungsquerschnitt verschlossen ist.

Strömt nun das einzuspritzende Medium aufgrund eines Impulsentleerungsvorgangs zurück, also aus dem Dosierventil 3 heraus in Richtung eines Pfeils 18, so wird in dem Frischluftkanal 6 ein Unterdruck erzeugt, der durch die Drossel 17 lokal weiter erhöht wird, wodurch der Ventilkolben 12 aus einer geschlossenen in eine geöffnete Position gezogen wird und Frischluft durch den Luftfilter 10, durch das Rückschlagventil 7 und in den Zulaufkanal 5 strömt. Damit die Frischluft durch das Rückschlagventil 7 an dem in der Ventilhülse 13 gelagerten Ventilkolben 12 vorbeiströmen kann, weisen vorzugsweise der Ventilkolben 12 und/oder die Hülse 13 nutförmige Aussparungen auf, die sich axial entlang der Innenseite der Hülse 13 und/oder der Mantelaußenfläche des Kolbens 12 bis zu dem Ventilsitz 15 beziehungsweise dem Ventileller 16 erstrecken. Der Ventilsitz 15 und der Ventilteller 16 sind zweckmäßigerweise derart ausgebildet, dass sie eine ringförmige Dichtfläche bilden, die sich durchgehend über den gesamten Umfang erstreckt.

Die vorteilhafte Ausbildung des Dosiermoduls 1 führt dazu, dass auf die Rückstellfeder verzichtet werden kann und insofern Bauraumvorteile erzielt werden. Durch die Selbsthemmung des Ventilkolbens 12 und der Ventilhülse 13, die für ein langsames Öffnen des Rückschlagventils 7 sorgt, wird die Funktion des Rückschlagventils 7 dennoch gewährleistet. Bei einer Wiederbefüllung des Dosierventils 2 wird zuerst die in dem System befindliche Luft komprimiert, wodurch der Ventilkolben 2 bereits in Richtung des Ventilsitzes 15 verlagert wird. Sobald in dem Zulaufkanal 5 und damit in dem Frischluftkanal 6 bis zu dem Rückschlagventil 7 das flüssige einzuspritzende Medium steht, wirkt der Systemdruck gegen den Ventilteller 16 des Ventilkolbens 2, wodurch das Rückschlagventil 7 vollständig dicht verschlossen wird. Insgesamt wird hierdurch die Dichtheit und Belastbarkeit des Dosiermoduls 1 auf einfache Art und Weise gewährleistet. Natürlich ist es auch denkbar, zusätzlich eine Rückstellfeder vorzusehen, um die Funktionssicherheit des Rückschlagventils 7 weiter zu erhöhen.

Anstelle der Drosselplatte mit der Drossel 17 ist es auch denkbar, die Drossel 17 als Membran mit Drosselstelle auszubilden, so dass auch wenn Flüssigkeit in dem System verbleibt, die Volumenzunahme beim Gefrieren der Flüssigkeit kompensiert werden kann.

## Patentansprüche

1. Dosiermodul (1), insbesondere für eine Abgasnachbehandlungseinrichtung (2) eines Kraftfahrzeugs, mit einem Dosierventil (3) zum Einspritzen eines flüssigen Mediums, wobei dem Dosierventil (3) ein Zulaufkanal (5) für das einzuspritzende Medium zugeordnet ist, und wobei in den Zulaufkanal (5) ein Frischluftkanal (6) mündet, in welchem ein Rückschlagventil (7) angeordnet ist, **dadurch gekennzeichnet, dass** dem Rückschlagventil (7) eine Drossel (17) zugeordnet ist, und dass das Rückschlagventil (7) als Ventilkörper (8) einen Ventilkolben (12) aufweist.

2. Dosiermodul nach Anspruch 1, **dadurch gekennzeichnet, dass** die Drossel dem Rückschlagventil (7) in Durchströmungsrichtung in dem Frischluftkanal (6) nachgeschaltet ist.

3. Dosiermodul nach einem der vorhergehenden Ansprüche, **dadurch gekennzeichnet, dass** der Ventilkolben (12) in einer Ventilhülse (13) axial verlagerbar angeordnet ist.

4. Dosiermodul nach einem der vorhergehenden Ansprüche, **dadurch gekennzeichnet, dass** das Rückschlagventil (7) rückstellfederfrei ausgebildet ist.

5. Dosiermodul nach einem der vorhergehenden Ansprüche, **dadurch gekennzeichnet, dass** das Dosiermodul (1) ein das Dosierventil (3) aufnehmendes Gehäuse (4) aufweist.

6. Dosiermodul nach einem der vorhergehenden Ansprüche, **dadurch gekennzeichnet, dass** das Gehäuse (4) den Zulaufkanal (5) aufweist.

7. Abgasnachbehandlungseinrichtung (2) für ein Kraftfahrzeug, mit einem Abgasstrang, durch welchen das Abgas einer Brennkraftmaschine des Kraftfahrzeugs geleitet wird, und mit einem dem Abgasstrang zugeordneten Dosiermodul (1) zum Einspritzen von flüssigem Abgasnachbehandlungsmittel, **gekennzeichnet durch** die Ausbildung des Dosiermoduls (1) nach einem oder mehreren der vorhergehenden Ansprüche.

## Claims

1. Dosing module (1), in particular for an exhaust-gas aftertreatment device (2) of a motor vehicle, having a dosing valve (3) for injecting a liquid medium, wherein the dosing valve (3) is assigned a feed duct (5) for the medium to be injected, and wherein a fresh-air duct (6) in which a check valve (7) is arranged opens into the feed duct (5), **characterized in that** the check valve (7) is assigned a throttle (17), and **in that** the check valve (7) has, as a valve body (8), a valve piston (12).

2. Dosing module according to Claim 1, **characterized in that** the throttle is positioned downstream of the check valve (7) in the throughflow direction in the fresh-air duct (6).

3. Dosing module according to one of the preceding claims, **characterized in that** the valve piston (12) is arranged in axially displaceable fashion in a valve sleeve (13).

4. Dosing module according to one of the preceding claims, **characterized in that** the check valve (7) is configured without a restoring spring.

5. Dosing module according to one of the preceding claims, **characterized in that** the dosing module (1) has a housing (4) which receives the dosing valve (3).

6. Dosing module according to one of the preceding claims, **characterized in that** the housing (4) has the feed duct (5).

7. Exhaust-gas aftertreatment device (2) for a motor vehicle, having an exhaust tract through which the exhaust gas of an internal combustion engine of the motor vehicle is conducted, and having a dosing module (1), which is assigned to the exhaust tract, for injecting liquid exhaust-gas aftertreatment agent, **characterized by** the design of the dosing module (1) according to one or more of the preceding claims.

## Revendications

1. Module de dosage (1), en particulier pour un dispositif de post-traitement de gaz d'échappement (2) d'un véhicule automobile, comprenant une soupape de dosage (3) pour l'injection d'un milieu fluide, un canal d'alimentation (5) pour le milieu à injecter étant associé à la soupape de dosage (3) et un canal d'air frais (6) débouchant dans le canal d'alimentation (5), dans lequel canal d'air frais est disposée une soupape de non-retour (7), **caractérisé en ce**
**qu'**un étranglement (17) est associé à la soupape de non-retour (7) et en ce que la soupape de non-retour (7) présente, en tant que corps de soupape (8), un piston de soupape (12).

2. Module de dosage selon la revendication 1, **caractérisé en ce que** l'étranglement est monté dans le canal d'air frais (6) en aval de la soupape de non-retour (7) dans le sens de l'écoulement.

3. Module de dosage selon l'une quelconque des revendications précédentes, **caractérisé en ce que** le piston de soupape (12) est disposé de manière déplaçable axialement dans une douille de soupape (13).

4. Module de dosage selon l'une quelconque des revendications précédentes, **caractérisé en ce que** la soupape de non-retour (7) est réalisée sans ressort de rappel.

5. Module de dosage selon l'une quelconque des revendications précédentes, **caractérisé en ce que** le module de dosage (1) présente un boîtier (4) recevant la soupape de dosage (3).

6. Module de dosage selon l'une quelconque des revendications précédentes, **caractérisé en ce que** le boîtier (4) présente le canal d'alimentation (5).

7. Dispositif de post-traitement de gaz d'échappement (2) pour un véhicule automobile, comprenant une ligne d'échappement à travers laquelle le gaz d'échappement d'un moteur à combustion interne du véhicule automobile est guidé, et comprenant un module de dosage (1) associé à la ligne d'échappement pour l'injection d'un agent fluide de post-traitement de gaz d'échappement, **caractérisé par** la réalisation du module de dosage (1) selon l'une quelconque ou plusieurs des revendications précédentes.
